# EUROPÄISCHE PATENTSCHRIFT

(11) **EP 3 827 209 B1**
(45) Veröffentlichungstag und Bekanntmachung des Hinweises auf die Patenterteilung: **29.06.2022**
(21) Anmeldenummer: 19786265.9
(22) Anmeldetag: 24.09.2019
(51) Int. Cl.: F27D 9/00, C21D 11/00

(54) **VERFAHREN UND VORRICHTUNG ZUM KÜHLEN EINES WERKZEUGS**
METHOD AND DEVICE FOR COOLING A TOOL
PROCÉDÉ ET DISPOSITIF DE REFROIDISSEMENT D'UN OUTIL

(30) Priorität: 09.10.2018 DE 102018124909
(43) Veröffentlichungstag der Anmeldung: 02.06.2021
(73) Patentinhaber: GEDIA Gebrüder Dingerkus GmbH, 57439 Attendorn (DE)
(72) Erfinder: FLESCH, Volker, 57439 Attendorn (DE); MÜLLER, Björn, 57439 Attendorn (DE); MÜLLER, Patrick, 57399 Kirchhundem (DE); WINDERLICH, Maik, 57489 Drolshagen (DE); WISNIA, Thorsten, 57439 Attendorn (DE)
(74) Vertreter: Köchling, Conrad-Joachim
(86) Internationale Anmeldenummer: PCT/DE2019/100834
(87) Internationale Veröffentlichungsnummer: WO 2020/074038

(56) Entgegenhaltungen:
- CN-A- 105 783 527
- DD-A1- 277 738
- US-A- 3 995 687
- US-A- 4 301 320
- US-A1- 2003 106 673

## Beschreibung

Die Erfindung betrifft ein Verfahren zum Kühlen eines Werkzeugs in einem Wärmebehandlungsofen, wobei das Werkzeug während eines regulären Kühlbetriebs über einen Zulauf mit Kühlmittel aus einem Kühlmittelspeicher versorgt wird, welches das Werkzeug durchströmt und über einen Rücklauf aus dem Werkzeug heraus zurück in den Kühlmittelspeicher geleitet wird.

Solche Verfahren zum Kühlen eines Werkzeugs und Vorrichtungen zur Durchführung dieser Verfahren sind im Stand der Technik bekannt. Dabei wird das Werkzeug an einen Kühlkreislauf angeschlossen, bei dem ein Kühlmittel aus einem Kühlmittelspeicher bereitgestellt wird und über einen Zulauf in das Werkzeug eingeleitet wird. Über einen Rücklauf wird das in dem Werkzeug erwärmte Kühlmittel zurück in den Kühlmittelspeicher geleitet, der durch eine Kühleinrichtung gekühlt wird und das Kühlmittel für die weitere Verwendung abkühlt.

Aus der US 4,301,320 A ist eine Notkühlung für einen elektrischen Ofen bekannt.

Die US 2003/106673 A1 offenbart ein Kühlsystem für einen metallurgischen Ofen.

Aus der US 3,995,687 A ist eine Notkühlung für Schachtöfen, insbesondere ein Hochofen bekannt.

Die DD 277738 A1 beschreibt einen Überhitzungsschutz für kohlebefeuerte Kessel von Warmwasserpumpenheizanlagen.

Die CN 105783527 A beschreibt einen Vakuum-Heißpressofen mit einem Zirkulationssystem für Kühlung.

Der Nachteil bei den eingangs genannten Kühlverfahren liegt darin, dass bei einem Stromausfall keine Kühlung des Werkzeuges erfolgen kann, da das Kühlmittel ohne Stromversorgung nicht aus dem Kühlmittelspeicher in das Werkzeug gepumpt werden kann. Dem Wärmebehandlungsofen wird zwar bei einem Stromausfall keine weitere Energie zugeführt, jedoch bleibt eine hohe Temperatur in dem Ofen bestehen, sodass das ungekühlte Werkzeug drin Schaden nimmt.

Die Aufgabe der Erfindung liegt somit darin, ein Verfahren und eine Vorrichtung zu schaffen, bei dem und mit der ein Werkzeug in einem Wärmebehandlungsofen im Falle einer Unterbrechung der Stromzufuhr ausreichend gekühlt ist.

Zur Lösung dieser Aufgabe schlägt die Erfindung vor, dass der Zulauf mit einem elektrischen Stellglied alternativ an den Kühlmittelspeicher oder an das städtische Wassernetz gekoppelt ist und der Rücklauf mit einem weiteren elektrischen Stellglied alternativ an den Kühlmittelspeicher oder an das städtische Abwassersystem gekoppelt ist, und die Stellglieder bei dem regulären Kühlbetrieb mit einem Speisestrom beaufschlagt und in einer ersten Stellung gehalten werden, in der dem Werkzeug über den Zulauf des Kühlmittelspeichers Kühlmittel zugeführt wird und das Kühlmittel über den Rücklauf zurück in den Kühlmittelspeicher geleitet wird, wobei bei einer Unterbrechung der Stromversorgung die Stellglieder zwangsweise in eine Notstellung verstellt werden, in der dem Werkzeug über den Zulauf des städtischen Wassernetzes Kaltwasser zugeführt wird, welches das Werkzeug durchströmt, und das Wasser über den Rücklauf dem städtischen Abwassersystem zugeführt wird.

Das Stellglied wird mit einem Speisestrom versorgt und dadurch in einer ersten Stellung gehalten. In dieser Stellung wird das Verfahren im regulären Kühlbetrieb betrieben, bei dem das Werkzeug über den Zulauf mit Kühlmittel aus dem Kühlmittelspeicher versorgt wird und das Kühlmittel über den Rücklauf aus dem Werkzeug heraus zurück in den Kühlmittelspeicher geleitet wird. Das Kühlmittel wird mittels einer elektrischen Pumpe in das Werkzeug gepumpt.

Im Falle einer Unterbrechung der Stromversorgung, beispielsweise eines Stromausfalls, kann die Pumpe kein Kühlmittel in das Werkzeug pumpen. Auch die Stromzufuhr zu den Stellgliedern wird unterbrochen und die Stellglieder werden zwangsweise in eine Notstellung verstellt, in der das Werkzeug über das städtische Wassernetz mit Kaltwasser versorgt wird. Das städtische Wasser wird durch den anliegenden Netzdruck in das Werkzeug geleitet. Somit ist eine Kühlung des Werkzeugs auch bei einer Unterbrechung der Stromzufuhr sichergestellt.

Es ist bevorzugt vorgesehen, dass Parameter des Kühlmittels während des Zu- und Rücklaufs erfasst werden und bei einem Über- oder Unterschreiten der erfassten Parameter von festgelegten Parametern des Kühlmittels, die Stellglieder zwangsweise in die Notstellung verstellt werden.

Die erfassten Parameter werden mit zuvor festgelegten Parametern abgeglichen. Werden diese festgelegten Parameter bzw. festgelegte Grenzwerte der Parameter über- oder unterschritten, so wird die Stromzufuhr automatisch unterbrochen und die Stellglieder werden zwangsweise in die Notstellung verstellt, in der das Werkzeug mit städtischem Kaltwasser versorgt wird. Dadurch ist nicht nur bei einem Stromausfall, sondern auch bereits bei einem Über- oder Unterschreiten von kritischen Grenzwerten eine Kühlung des Werkzeugs sichergestellt.

Vorzugsweise ist dabei vorgesehen, dass die Parameter von Messgeräten erfasst werden, wobei Temperatur, Druck und Durchflussmenge des Kühlmittels gemessen werden.

Diese Parameter eignen sich besonders, um das Werkzeug vor einer Überhitzung zu schützen.

Dabei ist vorzugsweise vorgesehen, dass die Stellglieder mit einer Federkraft in die Notstellung verstellt werden und die alternative Stellung der Stellglieder durch eine Stromversorgung eingestellt wird, wobei mittels der Stromversorgung die Federkraft überwunden und die Stellglieder in die erste Stellung verstellt werden.

Durch die Federrückstellung ergibt sich der Vorteil, dass die Notstellung bei einer Unterbrechung der Stromversorgung ohne äußere Einwirkung erfolgen kann. Dadurch ist zu jeder Zeit sichergestellt, dass das Werkzeug ausreichend gekühlt ist.

Zur Lösung der Aufgabe schlägt die Erfindung eine Vorrichtung gemäß Anspruch 5 vor.

Im regulären Kühlbetrieb sind Zu- und Rücklauf des Werkzeugs jeweils mit einem Stellglied an den Normalkühlkreis angeschlossen und das Werkzeug ist durch das Kühlmittel gekühlt, welches dem Kühlmittelspeicher der Vorrichtung entnommen ist. Das Kühlmittel wird mittels einer elektrischen Pumpe in das Werkzeug gepumpt.

Die Stellglieder sind mit einem Speisestrom beaufschlagt und dadurch in einer ersten Stellung gehalten, in der Kühlmittel des Kühlmittelspeichers durch die Vorrichtung strömt und das Werkzeug durch das Kühlmittel gekühlt ist.

Bei einer Unterbrechung der Stromzufuhr kann kein Kühlmittel mehr über die Pumpe in das Werkzeug gepumpt werden und der Kühlbetrieb ist vom Normalkühlkreislauf auf den Notkühlkreislauf umgestellt. Auch die Stromversorgung der Stellglieder ist unterbrochen, sodass die Stellglieder zwangsweise in eine Notstellung verstellt sind und der Zulauf mit dem Zulauf des städtischen Wassernetzes und der Rücklauf mit dem städtischen Abwassersystem verbunden ist. Das Netzwasser ist durch den anliegenden Netzdruck in das Werkzeug geleitet, sodass die Vorrichtung dann von städtischem Kaltwasser durchströmt wird und das Werkzeug durch das Kaltwasser gekühlt ist. Dadurch ist zu jeder Zeit sichergestellt, dass das Werkzeug ausreichend gekühlt und vor Schäden geschützt ist, auch im Falle einer Unterbrechung der Stromzufuhr, wie beispielsweise einem Stromausfall.

Die Stellglieder werden durch die Unterbrechung der Stromzufuhr zwangsweise in die Notstellung verstellt, sodass eine automatische Umstellung erfolgt, ohne dass von außen auf die Vorrichtung eingewirkt werden muss.

Bevorzugt ist dabei vorgesehen, dass in dem Zulauf und in dem Rücklauf und in dem Zu- und Rücklauf des Kühlmittelspeichers Messgeräte zur Erfassung von Parametern des Kühlmittels angeordnet sind und bei einem Über- oder Unterschreiten von vorbestimmten Parametern des Kühlmittels die Stromversorgung unterbrochen ist.

Durch die Messgeräte werden die Parameter des Kühlmittels wie Temperatur, Druck und Durchflussmenge erfasst. Diese Parameter sind mit festgelegten Parametern abgeglichen und bei einem Über- oder Unterschreiten der Parameter ist die Stromzufuhr unterbrochen. Die Stellglieder, die durch den Speisestrom in der ersten Stellung gehalten sind, in der das Werkzeug mit dem Kühlmittel des Kühlmittelspeichers versorgt ist, sind durch die Unterbrechung der Stromzufuhr zwangsweise in die Notstellung verstellt, sodass das Werkzeug durch städtisches Kaltwasser gekühlt ist.

Vorzugsweise ist vorgesehen, dass die Stellglieder eine Feder aufweisen, durch die die Stellglieder zwangsweise in die Notstellung verstellt sind, wobei die erste Stellung durch eine Stromzufuhr eingestellt ist, durch die die Federkraft der Feder überwunden ist.

Im regulären Betrieb der Vorrichtung sind die Stellglieder mit dem Speisestrom beaufschlagt und in der ersten Stellung gehalten, in der das Werkzeug durch Kühlmittel des Kühlmittelspeichers gekühlt ist. Durch die Stromzufuhr ist eine Federkraft, die die Stellglieder bei Unterbrechung der Stromzufuhr in die Notstellung zwangsweise verstellt, überwunden. Bei Unterbrechung der Stromzufuhr sind die Stellglieder dann durch die Federkraft einer in den Stellgliedern integrierten Feder zwangsweise in die Notstellung verstellt, sodass eine automatische Umstellung in den Notkühlkreislauf erfolgt. Dadurch ist bei einer Unterbrechung der Stromzufuhr kein Eingriff von außen auf die Stellglieder notwendig und das Werkzeug ist zu jeder Zeit ausreichend gekühlt.

Ein Ausführungsbeispiel der erfindungsgemäßen Vorrichtung ist in den Figuren dargestellt und nachfolgend näher erläutert.

Es zeigt:
- Fig. 1: eine Schematische Darstellung der Vorrichtung im normalen Kühlbetrieb;
- Fig. 2: eine schematische Darstellung der Vorrichtung im Notkühlbetrieb.

Die Figuren zeigen schematisch eine Vorrichtung zum Kühlen eines Werkzeugs in einem Wärmebehandlungsofen und zur Durchführung eines Verfahrens zum Kühlen des Werkstücks.

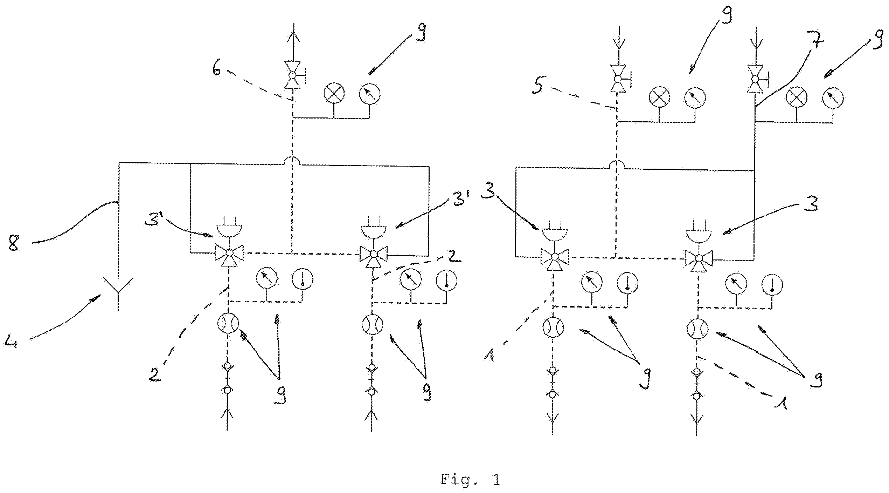

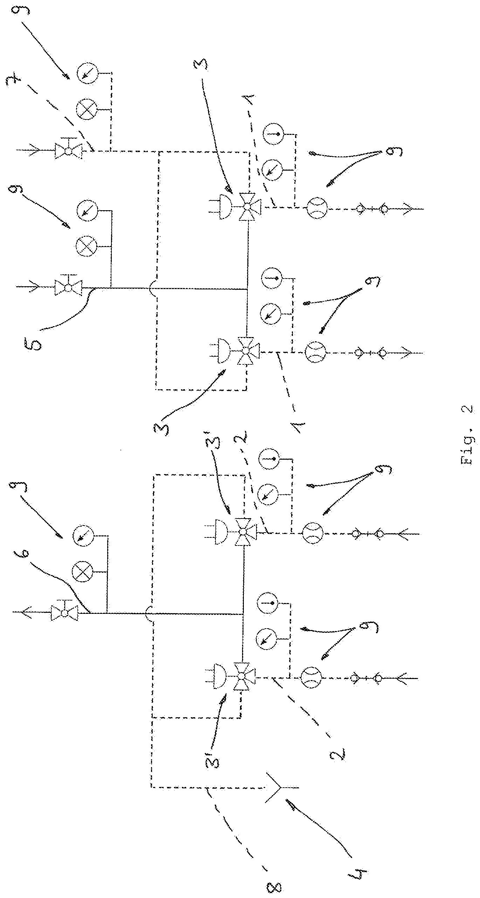

Die Vorrichtung weist zwei Zuläufe 1 und zwei Rückläufe 2 auf, die an das Werkzeug angeschlossen sind, wobei das Werkzeug in den Figuren nicht dargestellt ist. Die Zu- und Rückläufe 1,2 weisen elektrische Stellglieder 3,3' auf, mit denen die Zu- und Rückläufe 1,2 alternativ an einen Normalkühlkreislauf (Fig. 1) oder einen Notkühlkreislauf (Fig. 2) angeschlossen sind. In einem regulären Kühlbetrieb (Fig. 1) sind die Stellglieder 3,3' mit einem Speisestrom beaufschlagt und in einer ersten Stellung gehalten, in der die Zu- und Rückläufe an den Normalkühlkreislauf angeschlossen sind und das Werkzeug von einem Kühlmittel des Kühlmittelspeichers der Vorrichtung durchströmt ist. Der Normalkühlkreislauf ist in Fig. 1 in gestrichelten Linien dargestellt. Dabei sind die Zuläufe 1 mit einem Zulauf 5 des Kühlmittelspeichers verbunden und die Rückläufe 2 mit einem Rücklauf 6 des Kühlmittelspeichers verbunden, wobei der Kühlmittelspeicher in den Figuren nicht dargestellt ist. Das Kühlmittel wird mittels einer elektrischen Pumpe aus dem Kühlmittelspeicher in das Werkzeug gepumpt.

Bei einer Unterbrechung der Stromversorgung kann die elektrische Pumpe kein Kühlmittel mehr durch die Vorrichtung pumpen und die Stellglieder 3,3' sind zwangsweise in eine Notstellung verstellt, in der die Zu- und Rückläufe 1,2 an einen Notkühlkreislauf (Fig. 2) angeschlossen sind und das Werkzeug von städtischem Wasser durchströmt ist. Der Notkühlreislauf ist in Fig. 2 in gestrichelten Linien dargestellt. Dabei sind die Zuläufe 1 mit dem Zulauf 7 des städtischen Wassernetzes verbunden und das städtische Wasser wird durch den anliegenden Netzdruck in die Vorrichtung und damit in das Werkzeug geleitet. Die Rückläufe 2 sind mit einem Rücklauf 8 mit dem städtischen Abwassersystem 4 verbunden, sodass das erwärmte städtische Wasser in den städtischen Wasserkreislauf zurückgeführt ist.

Durch die Verstellung der Stellglieder 3,3' bei einer Unterbrechung der Stromzufuhr ist zu jeder Zeit sichergestellt, dass das Werkzeug ausreichend gekühlt und vor Schäden geschützt ist. Die Stellglieder 3,3' werden dazu zwangsweise in die Notstellung verstellt, sodass eine automatische Umstellung erfolgt ohne, dass von außen auf die Vorrichtung eingewirkt werden muss und beispielsweise eine handbetätigte Umstellung erfolgen muss.

In den Zu- und Rückläufen 1,2 des Werkzeugs sind Messgeräte 9 angeordnet, mit denen die Parameter des Kühlmittels wie Temperatur, Druck und Durchflussmenge erfasst werden. Auch in dem Zu- und Rücklauf 5,6 des Kühlmittelspeichers sind Messgeräte 9 zur Erfassung solcher Parameter angeordnet. Die Messwerte werden mit vorbestimmten Parametern abgeglichen. Bei einem Über- oder Unterschreiten der vorbestimmten Parameter, ist die Stromversorgung unterbrochen und die Vorrichtung an den Notkühlkreislauf angeschlossen. Dabei sind die Stellglieder 3,3' durch die Unterbrechung der Stromzufuhr zwangsweise in die Notstellung verstellt, sodass das Werkzeug durch städtisches Kaltwasser gekühlt ist.

Die Stellglieder 3,3' weisen eine Feder auf, durch die die Stellglieder 3,3' bei einer Unterbrechung der Stromzufuhr zwangsweise in die Notstellung verstellt sind. Liegt keine Unterbrechung der Stromzufuhr vor, sind die Stellglieder durch den Speisestrom versorgt und die Federkraft der Feder, die die Stellglieder 3,3' bei Unterbrechung der Stromzufuhr in die Notstellung zwangsweise verstellt, ist überwunden, sodass die Stellglieder 3,3'in der ersten Stellung gehalten sind.

Durch die zwangsweise Verstellung der Stellglieder 3,3' erfolgt eine automatische Umstellung in den Notkühlkreislauf. Dadurch ist bei einer Unterbrechung der Stromzufuhr kein Eingriff von außen auf die Stellglieder 3,3' notwendig und das Werkzeug ist zu jeder Zeit ausreichend gekühlt.

Anhand der Figuren ist nachfolgend der Verfahrensablauf erläutert.

In dem regulären Kühlbetrieb, der in Fig. 1 durch die gestrichenen Linien dargestellt ist, wird das Werkzeug über dessen Zuläufe 1 mit Kühlmittel aus dem Kühlmittelspeicher versorgt und durchströmt. Anschließend wird das erwärmte Kühlmittel über die Rückläufe 2 des Werkzeugs, aus diesem heraus, zurück in den Kühlmittelspeicher geleitet, der mit einer Kühlung ausgestattet ist, und in dem das erwärmte Kühlmittel für die weitere Verwendung abkühlt wird. Die Zu- und Rückläufe 1,2 sind mit dem Zu- und Rücklauf 5,6 des Kühlmittelspeichers verbunden.

Während des Zu- und Rücklaufs werden Parameter des Kühlmittels, wie Temperatur, Druck und Durchflussmenge, erfasst und mit festgelegten Parametern abgeglichen.

Die Zuläufe 1 werden jeweils mit einem elektrischen Stellglied 3,3' alternativ an den Kühlmittelspeicher oder an das städtische Wassernetz gekoppelt. Auch die Rückläufe 2 sind jeweils mit einem weiteren elektrischen Stellglied 3,3' alternativ an den Kühlmittelspeicher oder an das städtische Abwassersystem 4 gekoppelt. Die Stellglieder 3,3' werden bei dem regulären Kühlbetrieb mit einem Speisestrom beaufschlagt und in der ersten Stellung gehalten, in der dem Werkzeug über den Zulauf 5 des Kühlmittelspeichers Kühlmittel zugeführt wird und das Kühlmittel über die Rückläufe 2 des Werkzeugs und den Rücklauf 6 des Kühlmittelspeichers zurück in den Kühlmittelspeicher geleitet wird (Fig. 1).

Bei einer Unterbrechung der Stromversorgung, wie z.B. einem Stromausfall, wird auch die Stromzufuhr zu den Stellgliedern 3,3' unterbrochen und die Stellglieder 3,3' werden zwangsweise in eine Notstellung verstellt, in der dem Werkzeug über den Zulauf des städtischen Wassernetzes Kaltwasser zugeführt wird. Dieser Notkühlkreislauf ist in Fig. 2 in gestrichenen Linien dargestellt. Das Wasser durchströmt das Werkzeug und wird über die Rückläufe 2 und den Rücklauf 8 dem städtischen Abwassersystem 4 zugeführt. Somit ist eine Kühlung des Werkzeugs auch bei einer Unterbrechung der Stromzufuhr gesichert.

Außerdem wird die Stromzufuhr unterbrochen, wenn bei dem Abgleich der Parameter des Kühlmittels die vorbestimmten Parameter über- oder unterschritten werden. Auch in diesem Fall werden die Stellglieder 3,3' zwangsweise in die Notstellung verstellt und das Werkzeug mit Kaltwasser des städtischen Wassernetzes gekühlt (Fig. 2). Durch den Abgleich der Parameter und das verstellen der Stellglieder 3,3' in die Notstellung kann das Werkzeug vor einer Überhitzung und damit vor einer Schädigung geschützt werden.

Somit erfolgt eine Kühlung des Werkzeugs sowohl bei einem Stromausfall als auch bei einem Über- oder Unterschreiten von kritischen Kühlwasserparametern. Zur Verstellung der Stellglieder 3,3' weisen diese eine Feder auf, wobei die Stellglieder 3,3' mit der Federkraft der Feder in die Notstellung verstellt werden. Die alternative (erste) Stellung der Stellglieder 3,3' wird durch die Stromversorgung eingestellt, wobei mittels der Stromversorgung die Federkraft überwunden und die Stellglieder 3,3' in die erste Stellung verstellt werden. Dadurch ist eine Verstellung der Stellglieder 3,3' in die Notstellung ohne äußere Einwirkung möglich und das Werkzeug ist zu jeder Zeit ausreichend gekühlt.

Die Erfindung ist nicht auf das Ausführungsbeispiel beschränkt, sondern im Rahmen der Ansprüche vielfach variabel.

## Patentansprüche

1. Verfahren zum Kühlen eines Werkzeugs in einem Wärmebehandlungsofen, wobei das Werkzeug während eines regulären Kühlbetriebs über einen Zulauf (1) mit Kühlmittel aus einem Kühlmittelspeicher versorgt wird, welches das Werkzeug durchströmt und über einen Rücklauf (2) aus dem Werkzeug heraus zurück in den Kühlmittelspeicher geleitet wird, **dadurch gekennzeichnet, dass** der Zulauf (1) mit einem elektrischen Stellglied (3) alternativ an den Kühlmittelspeicher oder an das städtische Wassernetz gekoppelt ist und der Rücklauf (2) mit einem weiteren elektrischen Stellglied (3') alternativ an den Kühlmittelspeicher oder an das städtische Abwassersystem (4) gekoppelt ist, und die Stellglieder (3,3') bei dem regulären Kühlbetrieb mit einem Speisestrom beaufschlagt und in einer ersten Stellung gehalten werden, in der dem Werkzeug über den Zulauf (5) des Kühlmittelspeichers Kühlmittel zugeführt wird und das Kühlmittel über den Rücklauf (2,6) zurück in den Kühlmittelspeicher geleitet wird, wobei bei einer Unterbrechung der Stromversorgung die Stellglieder (3,3') zwangsweise in eine Notstellung verstellt werden, in der dem Werkzeug über den Zulauf (7) des städtischen Wassernetzes Kaltwasser zugeführt wird, welches das Werkzeug durchströmt, und das Wasser über den Rücklauf (2,8) dem städtischen Abwassersystem (4) zugeführt wird.

2. Verfahren nach Anspruch 1, **dadurch gekennzeichnet, dass** Parameter des Kühlmittels während des Zu- und Rücklaufs erfasst werden und bei einem Über- oder Unterschreiten der erfassten Parameter von festgelegten Parametern des Kühlmittels, die Stellglieder (3,3') zwangsweise in die Notstellung verstellt werden.

3. Verfahren nach Anspruch 2, **dadurch gekennzeichnet, dass** die Parameter von Messgeräten (9) erfasst werden, wobei Temperatur, Druck und Durchflussmenge des Kühlmittels gemessen werden.

4. Verfahren nach einem der Ansprüche 1 bis 3, **dadurch gekennzeichnet, dass** die Stellglieder (3,3') mit einer Federkraft in die Notstellung verstellt werden und die alternative Stellung der Stellglieder (3,3') durch eine Stromversorgung eingestellt wird, wobei mittels der Stromversorgung die Federkraft überwunden und die Stellglieder (3,3') in die erste Stellung verstellt werden.

5. Vorrichtung zum Kühlen eines Werkzeugs in einem Wärmebehandlungsofen, nach einem Verfahren gemäß einem der Ansprüche 1 bis 4, wobei die Vorrichtung einen Zulauf (1) und einen Rücklauf (2) und elektrische Stellglieder (3,3') aufweist, wobei der Zu- und der Rücklauf (1,2) an das Werkzeug angeschlossen und über die Stellglieder (3,3') alternativ an einen Normalkühlkreislauf oder einen Notkühlkreislauf angeschlossen sind, wobei die Stellglieder (3,3') in einem regulären Kühlbetrieb, bei dem Zu- und Rücklauf (1,2) an den Normalkühlkreislauf angeschlossen sind, mittels eines Speisestroms in einer ersten Stellung gehalten sind, und das Werkzeug von einem Kühlmittel durchströmt ist, wobei der Zulauf (1) mit einem Zulauf (5) eines Kühlmittelspeichers verbunden ist und der Rücklauf (2) mit einem Rücklauf (6) des Kühlmittelspeichers verbunden ist, und die Stellglieder (3,3') bei einem Ausfall der Stromversorgung in eine Notstellung verstellt sind, in der Zu- und Rücklauf (1,2) an den Notkühlkreislauf angeschlossen sind, und in der das Werkzeug von städtischem Wasser durchströmt ist, wobei der Zulauf (1) mit dem Zulauf (7) des städtischen Wassernetzes und der Rücklauf (2) mit dem städtischen Abwassersystem (4) verbunden ist.

6. Vorrichtung nach Anspruch 5, **dadurch gekennzeichnet, dass** in dem Zulauf (1) und in dem Rücklauf (2) und in dem Zu- und Rücklauf (5,6) des Kühlmittelspeichers Messgeräte (9) zur Erfassung von Parametern des Kühlmittels angeordnet sind und bei einem Über- oder Unterschreiten von vorbestimmten Parametern des Kühlmittels die Stromversorgung unterbrochen ist.

7. Vorrichtung nach Anspruch 5 oder 6, **dadurch gekennzeichnet, dass** die Stellglieder (3,3') eine Feder aufweisen, durch die die Stellglieder (3,3') zwangsweise in die Notstellung verstellt sind, wobei die erste Stellung durch eine Stromzufuhr eingestellt ist, durch die die Federkraft der Feder überwunden ist.

## Claims

1. A method for cooling a tool in a heat treatment furnace, wherein during a regular cooling operation, the tool is supplied, via an inlet (1), with coolant from a coolant storage, which coolant passes through the tool and is returned, via an outlet (2), from the tool back into the coolant storage, **characterized by that** the inlet (1) is coupled with an electrical actuator (3) alternatively to the coolant storage or to the public water network, and the outlet (2) is coupled with another electrical actuator (3') alternatively to the coolant storage or to the public waste water system (4), and during the regular cooling operation, a supply current is applied to the actuators (3, 3'), which are held in a first position, in which coolant is supplied to the tool via the inlet (5) of the coolant storage and the coolant is returned via the outlet (2, 6) back into the coolant storage, wherein in case of an interruption of the current supply, the actuators (3, 3') are forcibly set into an emergency position, in which cold water is supplied to the tool via the inlet (7) of the public water network, said cold water passing through the tool, and the water is supplied via the outlet (2, 8) to the public waste water system (4).

2. The method of claim 1, **characterized by that** parameters of the coolant are detected during the in- and outflow, and when the detected parameters are above or below predetermined parameters of the coolant, the actuators (3, 3') are forcibly set into the emergency position.

3. The method of claim 2, **characterized by that** the parameters are detected by measuring devices (9), with temperature, pressure, and flow rate of the coolant being measured.

4. The method of one of claims 1 to 3, **characterized by that** the actuators (3, 3') are set with a spring force into the emergency position, and the alternative position of the actuators (3, 3') is set by a current supply, wherein through the current supply, the spring force is overcome, and the actuators (3, 3') are set into the first position.

5. A device for cooling a tool in a heat treatment furnace, according to a method of one of claims 1 to 4, wherein the device comprises an inlet (1) and an outlet (2) and electrical actuators (3, 3'), wherein the in- and outlet (1, 2) are connected to the tool and via the actuators (3, 3') alternatively to a normal cooling circuit or an emergency cooling circuit, wherein in a regular cooling operation, in which the in- and outlet (1, 2) are connected to the normal cooling circuit, the actuators (3, 3') are held by means of a supply current in a first position, and the tool is passed by a coolant, wherein the inlet (1) is connected to an inlet (5) of a coolant storage and the outlet (2) is connected to an outlet (6) of the coolant storage, and in case of a failure of the current supply, the actuators (3, 3') are set into an emergency position, in which the in- and outlet (1, 2) are connected to the emergency cooling circuit, and in which the tool is passed by public water, wherein the inlet (1) is connected to the inlet (7) of the public water network and the outlet (2) is connected to the public waste water system (4).

6. The device of claim 5, **characterized by that** in the inlet (1) and in the outlet (2) and in the in- and outlet (5, 6) of the coolant storage, measuring devices (9) for detecting parameters of the coolant are arranged, and when the detected parameters are above or below predetermined parameters of the coolant, the current supply is interrupted.

7. The device of claim 5 or 6, **characterized by that** the actuators (3, 3') comprise a spring, by means of which the actuators (3, 3') are forcibly set into the emergency position, wherein the first position is set by a supply of current, by means of which the spring force of the spring is overcome.

## Revendications

1. Procédé de refroidissement d'un outil dans un four de traitement thermique, dans lequel l'outil pendant un fonctionnement de refroidissement régulier est alimenté, par l'intermédiaire d'un orifice d'arrivée (1), en réfrigérant à partir d'un réservoir de réfrigérant, ce réfrigérant traversant l'outil et étant ramené, par l'intermédiaire d'un orifice de sortie (2), à partir de l'outil dans le réservoir de réfrigérant, **caractérisé en ce que** l'orifice d'arrivée (1) est couplé avec un actionneur électrique (3) alternativement au réservoir de réfrigérant ou au réseau public d'eau, et l'orifice de sortie (2) est couplé avec un autre actionneur électrique (3') alternativement au réservoir de réfrigérant ou au système public des eaux usées (4), et pendant le fonctionnement de refroidissement régulier, un courant d'alimentation est appliqué aux actionneurs (3, 3'), qui sont retenus dans une première position, dans laquelle du réfrigérant est amené à l'outil par l'intermédiaire de l'orifice d'arrivée (5) du réservoir de réfrigérant, et le réfrigérant est ramené par l'intermédiaire de l'orifice de sortie (2, 6) dans le réservoir de réfrigérant, dans lequel lors d'une interruption de l'alimentation de courant les actionneurs (3, 3') sont déplacés forcément en une position de secours, dans laquelle de l'eau froide est amenée à l'outil par l'intermédiaire de l'orifice d'arrivée (7) du réseau public d'eau, l'eau froide parcourant l'outil, et l'eau est amenée par l'intermédiaire de l'orifice de sortie (2, 8) au système public des eaux usées (4).

2. Procédé selon la revendication 1, **caractérisé en ce que** des paramètres du réfrigérant sont acquis pendant l'entrée et la sortie, et lorsque les paramètres acquis sont au-dessus ou au-dessous de paramètres définis du réfrigérant, les actionneurs (3, 3') sont déplacés forcément en la position de secours.

3. Procédé selon la revendication 2, **caractérisé en ce que** les paramètres sont acquis par des dispositifs de mesure (9), dans lesquels la température, la pression et le débit du réfrigérant sont mesurés.

4. Procédé selon une des revendications 1 à 3, **caractérisé en ce que** les actionneurs (3, 3') sont déplacés par une force de ressort en la position de secours, et la position alternative des actionneurs (3, 3') est ajustée par une alimentation de courant, au moyen de l'alimentation de courant la force de ressort étant surmontée, et les actionneurs (3, 3') sont déplacés en la première position.

5. Dispositif de refroidissement d'un outil dans un four de traitement thermique, selon un procédé selon une des revendications 1 à 4, dans lequel le dispositif comporte un orifice d'arrivée (1) et un orifice de sortie (2) et des actionneurs (3, 3') électriques, dans lequel les orifices d'arrivée et de sortie (1, 2) sont raccordés à l'outil et sont raccordés par l'intermédiaire des actionneurs (3, 3') alternativement à un circuit de refroidissement normal ou un circuit de refroidissement de secours, dans lequel lors d'un fonctionnement de refroidissement régulier, dans lequel les orifices d'arrivée et de sortie (1, 2) sont raccordés au circuit de refroidissement normal, les actionneurs (3, 3') sont retenus au moyen d'un courant d'alimentation en une première position, et l'outil est parcouru par un réfrigérant, dans lequel l'orifice d'arrivée (1) est lié à un orifice d'arrivée (5) d'un réservoir de réfrigérant et l'orifice de sortie (2) est lié à un orifice de sortie (6) du réservoir de réfrigérant, et en cas de défaillance de l'alimentation de courant, les actionneurs (3, 3') sont ajustés en une position de secours, dans laquelle les orifices d'arrivée et de sortie (1, 2) sont raccordés au circuit de refroidissement de secours, et dans laquelle l'outil est parcouru par l'eau publique, l'orifice d'arrivée (1) étant lié à l'orifice d'arrivée (7) du réseau public d'eau et l'orifice de sortie (2) étant lié au système public des eaux usées (4).

6. Dispositif selon la revendication 5, **caractérisé en ce que** dans l'orifice d'arrivée (1) et dans l'orifice de sortie (2) et dans les orifices d'arrivée et de sortie (5, 6) du réservoir de réfrigérant, des dispositifs de mesure (9) pour l'acquise de paramètres du réfrigérant sont disposés, et lorsque les paramètres sont au-dessus ou au-dessous de paramètres définis du réfrigérant, l'alimentation de courant est interrompue.

7. Dispositif selon la revendication 5 ou 6, **caractérisé en ce que** les actionneurs (3, 3') comportent un ressort, par lequel les actionneurs (3, 3') sont ajustés forcément en la position de secours, la première position étant ajustée par une alimentation de courant, par laquelle la force du ressort est surmontée.
